(19) Europäisches Patentamt / European Patent Office / Office européen des brevets

(11) **EP 4 310 232 A1**

(12) **EUROPEAN PATENT APPLICATION**
published in accordance with Art. 153(4) EPC

(43) Date of publication:
**24.01.2024 Bulletin 2024/04**

(21) Application number: **22771010.0**

(22) Date of filing: **18.02.2022**

(51) International Patent Classification (IPC):
*D03D 1/02* (2006.01)    *B60R 21/235* (2006.01)

(52) Cooperative Patent Classification (CPC):
**B60R 21/235; D03D 1/02**

(86) International application number:
**PCT/JP2022/006773**

(87) International publication number:
**WO 2022/196251 (22.09.2022 Gazette 2022/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.03.2021 JP 2021042019**

(71) Applicant: **Toray Industries, Inc.**
**Tokyo 103-8666 (JP)**

(72) Inventors:
• **SUGANUMA, Yuta**
**Otsu-shi, Shiga 520-2141 (JP)**
• **MOTOMURA, Hiroki**
**Otsu-shi, Shiga 520-2141 (JP)**
• **YOKOI, Daisuke**
**Osaka-shi, Osaka 530-8222 (JP)**
• **EGAWA, Yusuke**
**Osaka-shi, Osaka 530-8222 (JP)**

(74) Representative: **Mewburn Ellis LLP**
**Aurora Building**
**Counterslip**
**Bristol BS1 6BX (GB)**

(54) **AIRBAG FABRIC**

(57)    It is an object of the present invention to provide a woven fabric for airbag with a high quality which can suppress generation of creases during refining, heat setting, and coating steps to be performed after weaving, has an excellent uniform applicability, and can suppress misalignment during cutting. Provided is a woven fabric for airbag consisting of synthetic fibers, wherein a ratio of a selvedge flare amount R represented by the following equation is 5.0% or less.

$$S = \sum_{k=1}^{n} (W_k \times H_k)/2$$

$$R = S/(200 \times F) \times 100$$

{wherein, S = selvedge flare amount, in cm$^2$, $W_k$ = selvedge flare width, in cm, $H_k$ = selvedge flare depth, in cm, n is the number of selvedge flares, R is a ratio of a selvedge flare amount, in %, and F is a base fabric width, in cm.}

FIG. 2

EP 4 310 232 A1

**Description**

TECHNICAL FIELD

The present invention relates to a woven fabric for airbag.

BACKGROUND ART

An automobile is equipped with an airbag for securing safety of passengers. In case of automobile crash, the airbag activates a sensor upon receiving an impact of the crash to generate a high-temperature, high-pressure gas therein, which instantly expands the airbag, protecting a passenger's face and forehead.

Generally, an airbag is manufactured by producing a base fabric obtained by coating or laminating resin such as silicone on a fabric made of a plain weave fabric using synthetic fibers of 150 to 600 dtex (a so-called coated fabric) in order to improve properties such as heat resistance, flame retardancy, and air barrier performance, cutting the base fabric, and sewing it into a bag body.

In addition, for the airbag, a base fabric having a reduced amount of air permeation in a fabric by weaving a synthetic fiber filament yarn such as a polyamide fiber at a higher density without being provided with resin, a so-called non-coated fabric, is also used.

In any case, a woven fabric for airbag has been required for having a high strength and a low air permeability in order to instantaneously expand the airbag in case of automobile crash and protect a passenger's face, forehead, etc. at the time of the crash.

For this reason, the woven fabric for air bag must be a high-density woven fabric using a yarn with a higher fineness and a higher strength compared to an ordinary woven fabric for cloth. However, in the woven fabric, a phenomenon referred to as selvedge slacking, or also selvedge loosening, in which the higher the weave density is, the looser the warp yarns of selvedges on both ends during weaving become, and the more the vicinities of the selvedge ends become wavy (hereinafter referred to as selvedge flare) occurs. Due to this selvedge flare, the woven fabric tends to cause troubles such as generation of curls and creases of the selvedge and compromise of uniform coatings of resin and elastomer, during refining and setting.

In addition, an airbag has been conventionally manufactured by a so-called cut-and-sewn method, by which a woven fabric of synthetic fibers is cut and sewn. In bag making of the airbag, a bag body is made by sewing cutout pieces of a base fabric. In order to make the most effective use of the base fabric for airbag, the base fabric usually adopts a design for cutting as bag-making pattern pieces up to the vicinity of the selvedge. Here, the cutting step includes a single-layer cutting in which a base fabric is cut one by one and a lamination cutting in which dozens of spread base fabrics are laminated and cut. The lamination cutting has an advantage of a high cutting efficiency. However, even for selvedge flare that has little effect on cutting of a single sheet, when a large number of base fabrics are laminated, selvedge flares of respective layers tend to accumulate and become noticeable. If selvedge flare occurs in the vicinities of the selvedge ends, the large number of laminated base fabrics are not cut into shapes as designed, especially with a laser cutter, which makes weaving in the later stage difficult, as well as makes it impossible to obtain an air bag shape as designed, compromising bag making of an airbag having normal functions. Although these problems have been conventionally found, they are more significant in the lamination cutting than in the single-layer cutting.

Various attempts to prevent selvedge flare due to weaving have been disclosed in a number of prior art documents.

For example, Patent Documents 1 and 2 describe a technique of preventing selvedge flare due to texture misalignment by an intertwining yarn provided on an outermost end of a woven fabric firmly gripping a weft yarn. Patent Document 3 describes a technique of preventing selvedge flare by increasing a warp density of a selvedge. Patent Document 4 describes a technique of preventing selvedge flare by inserting a yarn different from a ground yarn into a selvedge. Patent Document 5 describes a technique of preventing selvedge flare by inserting a high-tension yarn into a selvedge and crimping a ground yarn. Patent Document 6 describes a technique of preventing selvedge flare by subjecting a 30 cm selvedge to intense heat to match a shrinkage rate of the selvedge with that of a central part.

However, there has been no disclosure of a base fabric for airbag in which selvedge flare is suppressed in a layered state of the base fabric assuming a lamination cutting.

PRIOR ART DOCUMENT

Patent Document

# EP 4 310 232 A1

Patent Document 1: JP H06-322637 A
Patent Document 2: JP 2002-212856 A
Patent Document 3: JP 2009-035834 A
Patent Document 4: JP 2014-181430 A
Patent Document 5: WO 2020/174889
Patent Document 6: JP H11-048893 A

SUMMARY OF THE INVENTION

It is an object of the present invention to provide a base fabric for airbag having improved processability such as coating and bag-making performance. More specifically, it is an object of the present invention to provide a woven fabric for airbag with a high quality capable of suppressing selvedge flare that tends to occur in a high-weave-density woven fabric, and suppressing generation of creases during processing such as refining, setting, and coating, and misalignment during cutting.

As a result of intensive studies for solving the above-described problems, the present inventors have found that selvedge flare is caused not only by loosening of a selvedge, but also by making the selvedge to be in a tightened state to create distortion between the tightened part and an untightened part inside the selvedge. From the above, the present inventors have found that, using an intertwining yarn and an additional yarn each having a greater heat shrinkage than a ground yarn at the endmost part of the selvedge and exhibiting a specific range of difference in heat shrinkage with respect to the ground yarn, loosening of the selvedge is reduced, and an excessive selvedge tightening is suppressed, so that selvedge flare can be suppressed, to complete the present invention.

That is, the woven fabric for airbag of one aspect of the present invention that solves the above-described problems is a woven fabric for airbag consisting of synthetic fibers, wherein a ratio of a selvedge flare amount R represented by the following equation is 5.0% or less.

$$S = \sum_{k=1}^{n} (W_k \times H_k)/2$$

$$R = S/(200 \times F) \times 100$$

{wherein, S = selvedge flare amount, in cm², $W_k$ = selvedge flare width, in cm, $H_k$ = selvedge flare depth, in cm, n is the number of selvedge flares, R is a ratio of a selvedge flare amount, in %, and F is a base fabric width, in cm.}

In addition, in the woven fabric for airbag of one aspect of the present invention that solves the above-described problems, a difference obtained by subtracting a boiling water shrinkage of a ground yarn from a boiling water shrinkage of an intertwining yarn is 5.0% or less, and a difference obtained by subtracting the boiling water shrinkage of the ground yarn from a boiling water shrinkage of an additional yarn is 5.0% or less.

BRIEF DESCRIPTION OF THE DRAWINGS

FIG. 1 is a schematic view when measuring a selvedge flare amount.
FIG. 2 is a schematic view of a triangle Sk when measuring a selvedge flare amount.
FIG. 3 is a schematic view of using a light when measuring a selvedge flare amount.

EMBODIMENT FOR CARRYING OUT THE INVENTION

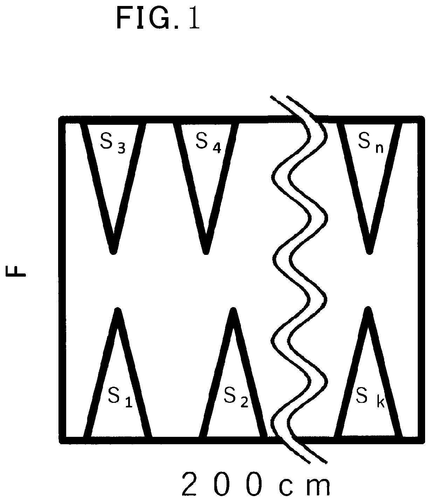

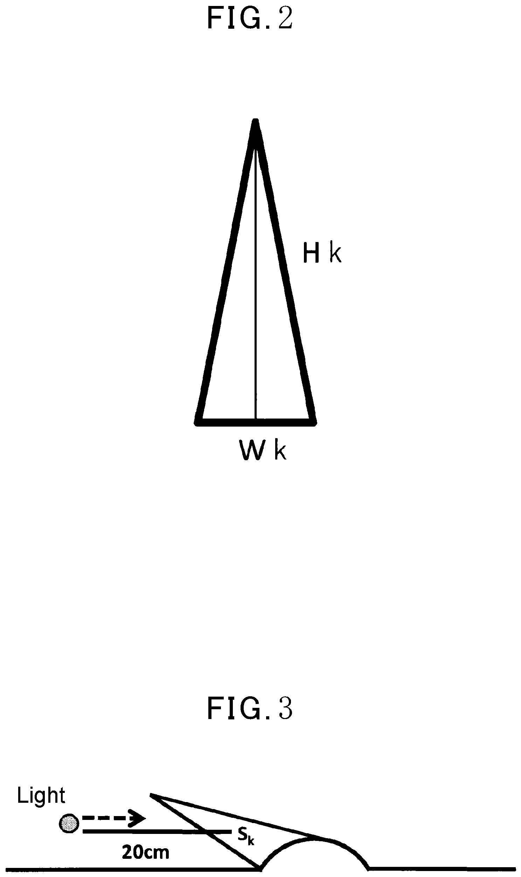

In the woven fabric for airbag of one embodiment of the present invention, a selvedge flare amount and a ratio of the selvedge flare amount are characteristics for evaluating slackness of a woven fabric and waviness of a selvedge of the woven fabric and are measured by the following procedures (see FIGS. 1, 2, and 3). A measurement sample is pulled out from a roll sample (original woven fabric) on a flat table in a longitudinal direction, and cut into 2 m pieces each, which are stacked into a total of 20 sheets of laminated layers, on which a 3 kg of paper tube that fills the width is placed and rolled in the longitudinal direction without applying any force from the end. A light with an illuminance of 1000 Lx at a distance of 50 cm is used to illuminate in order from a selvedge end upward from a height of 10 cm to find a triangular shadow due to selvedge flare. In selvedge flare that appears when irradiated with light from a position 20 cm away in a longitudinal direction from the center of the selvedge flare appeared, when an arc length of a portion that swells in a longitudinal direction of a base fabric is defined as a selvedge flare width, in $W_k$, and a swelling length in a width direction of the base fabric is defined as a selvedge flare depth, in $H_k$, a triangular area with the selvedge flare width being as the base and the selvedge flare depth being as the apex is measured on all the two sides having selvedge fringes of the base fabric to calculate a total area, which is defined as a selvedge flare amount S, which is divided by a sample area to calculate a ratio R of the selvedge flare amount.

$$S = \sum_{k=1}^{n} (W_k \times H_k) / 2$$

$$R = S / (200 \times F) \times 100$$

{wherein, S = selvedge flare amount, in $cm^2$, $W_k$ = selvedge flare width, in cm, $H_k$ = selvedge flare depth, in cm, n is the number of selvedge flares, R is a ratio of a selvedge flare amount, in %, and F is a base fabric width, in cm.}

The ratio R of the selvedge flare amount of the woven fabric for airbag of the present embodiment is 5% or less, preferably 4.5% or less. When the ratio R of the selvedge flare amount is 5% or less, the woven fabric for airbag can be suppressed from being misaligned during cutting, particularly during lamination cutting, allowing for bag making of an airbag having normal functions. Moreover, the woven fabric for airbag can suppress slackness of the selvedge and reduce generation of creases and non-uniform coating during processing.

In the woven fabric of the present embodiment, a difference between a crimp ratio of a warp yarn of a ground yarn in the central part and a crimp ratio of a warp yarn of a ground yarn in the vicinity of the selvedge is preferably 4.0% or less, more preferably 3.8% or less, and further preferably 3.6% or less. When the difference in the crimp ratio of the warp yarn of the ground yarn is 4.0% or less, a difference in an amount of warp yarn used between the selvedge and the central part becomes small, and selvedge flare is less likely to be induced. In the present embodiment, the selvedge refers to a root portion of a selvedge fringe of a woven fabric, that is, a portion containing an intertwining yarn and an additional yarn, defining a position where the vicinity of the selvedge fringe is cut (hereinafter referred to as a selvedge cut) as a reference, if it happens. As a result, the woven fabric has a stable woven structure during heat setting, so that the selvedge flare is not affected by presence or absence of the selvedge cut after heat setting. Besides, in the present embodiment, the "vicinity of the selvedge" refers to a range of 10 cm in width from a selvedge to a central direction.

[Woven fabric for airbag]

The woven fabric for airbag of one embodiment of the present invention (hereinafter also simply referred to as a woven fabric) consists of a synthetic fiber multifilament (hereinafter also referred to as a synthetic fiber yarn). Here, the ground refers to a part of a woven fabric body other than a selvedge composed of an intertwining yarn and an additional yarn. A material of the synthetic fiber includes, for example, a polyamide-based fiber, a polyester-based fiber, an aramid-based fiber, a rayon-based fiber, a polysulfone-based fiber, an ultra-high molecular weight polyethylene-based fiber, and the like. Among them, as the synthetic fiber, a polyamide-based fiber or a polyester-based fiber having excellent mass productivity and economic efficiency is preferable.

Examples of the polyamide-based fiber include, for example, fibers consisting of nylon 6, nylon 66, nylon 12, nylon 46, nylon 410, a copolymer polyamide of nylon 6 and nylon 66, a copolymerized polyamide obtained by copolymerizing nylon 6 with polyalkylene glycol, dicarboxylic acid, amine, etc., and the like. Among them, as the polyamide-based fiber, a nylon 6 fiber or a nylon 66 fiber is preferable from the viewpoint of its particularly excellent strength.

The polyester-based fiber is, for example, a fiber consisting of polyethylene terephthalate, polybutylene terephthalate, or the like. The polyester-based fiber may be a fiber consisting of a copolymer polyester obtained by copolymerizing polyethylene terephthalate or polybutylene terephthalate with isophthalic acid, 5-sodium sulfoisophthalic acid, or aliphatic dicarboxylic acid such as adipic acid as an acid component.

The synthetic fiber may contain an additive such as a heat stabilizer, an antioxidant, a light stabilizer, a smoothing agent, an antistatic agent, a plasticizer, a thickener, a pigment, and a flame retardants, for productivity in spinning/stretching processes or improvement in characteristics.

A cross-sectional shape of a single fiber of the synthetic fiber may be a circular cross-section or a flat cross-section.

In the woven fabric of the present embodiment, it is generally preferable that a warp yarn and a weft yarn both consists of the same kind of polymers. The same kind of polymers refer to polymers that are common in main repeating unit of the polymer, such as those of nylon 66 and of polyethylene terephthalate. For example, a combination of a homopolymer and a copolymer is also preferably used as the same kind of polymer in the present embodiment. Furthermore, the same kind of polymers are also preferable from the viewpoint of production management, because there is no need to distinguish between the warp yarn and the weft yarn if they are common in presence or absence of a copolymerization component and, if copolymerization is present, have the same combination of type and amount of the copolymerization component.

In the present embodiment, it is preferable to use a synthetic fiber filament having a single fiber fineness of 1 to 7 dtex as a synthetic fiber yarn used as the ground yarn of the woven fabric. When the single fiber fineness is 7 dtex or less, an air gap occupied between the single fibers in the woven fabric are reduced, and a filling effect of the fiber is further improved. Therefore, the woven fabric can reduce the amount of air permeation, which is preferable. Moreover, when the single fiber fineness is small, the rigidity of the synthetic fiber filament is reduced, and an effect of improving flexibility of the woven fabric can also be obtained. Therefore, the obtained airbag has improved storability, which is preferable.

A total fineness of synthetic fiber yarns used as ground yarns of the woven fabric is preferably 150 dtex or more, more preferably 200 dtex or more, and further preferably 250 dtex or more. Moreover, the total fineness of the synthetic fiber yarns used as the ground yarns of the woven fabric is preferably 600 dtex or less, more preferably 550 dtex or less, and further preferably 500 dtex or less. When the total fineness of the synthetic fiber yarns used as the ground yarns is 150 dtex or more, the woven fabric tends to maintain its excellent strength. Moreover, when the total fineness is 600 dtex or less, the obtained woven fabric tends to maintain its excellent compactness when stored and low air permeability. When the total fineness is within the above-described ranges, the woven fabric may improve in physical property in a well-balanced manner.

A boiling water shrinkage of the synthetic fiber yarn used as the ground yarn of the woven fabric is preferably 5 to 15%. When the boiling water shrinkage of the synthetic fiber yarn used as the ground yarn is within the above-described range, the woven fabric tends to achieve both low air permeability and compactness.

A tensile strength of the synthetic fiber constituting the woven fabric of the present embodiment (in particular, the synthetic fiber yarn used as the ground yarn) is preferably 7.5 cN/dtex or more, and more preferably 7.8 cN/dtex or more. Moreover, the tensile strength of the synthetic fiber constituting the woven fabric (in particular, the synthetic fiber yarn used as the ground yarn) is preferably 9.0 cN/dtex or less, and more preferably 8.7 cN/dtex or less. When the tensile strength of the synthetic fiber constituting the woven fabric (in particular, the synthetic fiber yarn used as the ground yarn) is within the above-described ranges, the woven fabric easily satisfies the mechanical properties required for an airbag and is excellent also in spinning operation.

An elongation of the synthetic fiber constituting the woven fabric of the present embodiment (in particular, the synthetic fiber yarn used as the ground yarn) is preferably 15% or more, and more preferably 18% or more. Moreover, the elongation of the synthetic fiber constituting the woven fabric (in particular, the synthetic fiber yarn used as the ground yarn) is preferably 35% or less, and more preferably 32% or less. When the elongation of the synthetic fiber constituting the woven fabric (in particular, the synthetic fiber yarn used as the ground yarn) is within the above-described ranges, the woven fabric easily satisfies the mechanical properties required for an airbag and is excellent also in spinning operation.

The woven fabric produced in the present embodiment appropriately consists of a warp yarn and a weft yarn each consisting of the same synthetic fiber yarn as described above, and a texture of the woven fabric is not particularly limited. By way of an example, the texture of the woven fabric includes a plain weave, a twill weave, a satin weave, and variations of these weaves, multi-axial weaves, and the like. Among them, the texture of the woven fabric is preferably a plain weave because it is excellent in mechanical property required for use in an airbag and is thin.

A weave density may vary depending on whether the woven fabric is resin-treated or not, on a fineness of a weaving yarn, or the like. A cover factor is preferably 1900 to 2500 for achieving both a low air permeability and a high slip resistance. In general, when the cover factor is within the above-described range, mechanical properties (tensile strength, tear strength, etc.) required for an airbag are properly maintained, and the woven fabric is likely to have a proper basis weight and less likely to become rough and hard. If the cover factor is less than 1900, the woven fabric is likely to have a small basis weight and cause yarn slippage. On the other hand, when the cover factor exceeds 2500, the woven fabric is likely to have a large basis weight and become rough and hard. Besides, in the present embodiment, the cover factor (CF) is a value calculated from a total fineness and a weave density of a warp or weft yarn and is defined by the following equation (1). Besides, in the equation (1), Dw is a warp total fineness (dtex), Nw is a warp density (yarn/2.54 cm), Df is a weft total fineness (dtex), and Nf is a weft density (yarn /2.54 cm).

$$CF = (Dw \times 0.9)^{1/2} \times Nw + (Df \times 0.9)^{1/2} \times Nf \ (1).$$

[Method of producing woven fabric for airbag]

Next, a method of producing a woven fabric for airbag according to one embodiment of the present invention (hereinafter also referred to as a method of producing a woven fabric) will be described. Besides, descriptions of the producing method (for example, a description of a boiling water shrinkage below) may be suitably applied as descriptions of the woven fabric for airbag described above. In the producing method of the woven fabric, first, a warp yarn having the total fineness described above in relation to the embodiment of the woven fabric is warped and installed on a loom. Similarly, a weft yarn is installed on the loom. The loom is not particularly limited. It is preferable to use, as the loom, a loom equipped with a full-width temple device when weaving a high-density woven fabric. Examples of the loom include a water jet loom, an air jet loom, a rapier loom, and the like. Among them, a water jet loom is preferable as the loom from the viewpoints that it is relatively easy for highspeed weaving and productivity can be easily improved.

During weaving, a tension applied to each warp yarn constituting a ground of a woven fabric is preferably adjusted in a range of 0.2 to 0.5 cN/dtex. When the tension of the warp yarn is within the above-described range, the obtained woven fabric may be improved in dimensional stability by reducing air gaps between single fibers in a bundle of multifilament yarns constituting the woven fabric. When the tension of the warp yarn is less than 0.2 cN/dtex, a binding force of the weft yarn during weaving is low, and a woven fabric having the same density between the warp yarn and the weft yarn is less likely to be obtained. On the other hand, when the tension of the warp yarn exceeds 0.5 cN/dtex, the warp yarn easily becomes fuzzy, and weaving performance easily deteriorates. A method of adjusting the tension of the warp yarn is not particularly limited. Besides, whether the tension of the warp yarn is within the above-described range may be confirmed, for example, by measuring, with a tension measuring instrument, a tension applied to each warp yarn in a warp beam and a central part of a back roller during operation of a loom.

In weaving the woven fabric for airbag of the present embodiment, for the selvedge, an intertwining yarn and an additional yarn are used at the selvedge end.

The intertwining yarn is also called a leno, which tightens the weft yarn while a plurality of yarns entwining at the outermost side of the selvedge of the woven fabric in order to prevent selvage loosing, forming a selvage. When forming the selvage, it is generally preferable to use a planetary gear mechanism, and more preferably to use a planetary gear twist system. Other methods of forming the selvage may be used. The number of intertwining yarns to be used is preferably two or more, and more preferably two for each end.

A total fineness of the intertwining yarns used in the woven fabric is preferably 150 dtex or less. When the total fineness is 150 dtex or less, the woven fabric has an increased binding force of the weft yarn per fineness and easily constructs a selvedge of the woven fabric without loosening it.

The intertwining yarn used in the woven fabric preferably has a difference of 5.0% or less, and more preferably 1.5 to 5.0% or less, as obtained by subtracting a boiling water shrinkage value (%) of the ground yarn from a boiling water shrinkage value (%) of the intertwining yarn. When the boiling water shrinkage of the intertwining yarn is equal to or higher than the boiling water shrinkage of the ground yarn, in the woven fabric, the intertwining yarn shrinks more than the ground yarn, and the selvedge tightens, so that selvedge slacking is suppressed. When the difference as obtained by subtracting the boiling water shrinkage value (%) of the ground yarn from the boiling water shrinkage value (%) of the intertwining yarn exceeds 5.0%, the woven fabric is easy to be excessively tightened at the selvedge due to the shrinkage difference, and the selvedge becomes in a suspended state to easily induce selvedge flare.

The additional yarn is also called a stay yarn, which is used for the purpose of preventing selvage loosing of the woven fabric in the same way as the intertwining yarn. The additional yarn is located between an intertwining yarn and a ground warp yarn and next to the intertwining yarn, at the selvedge of the woven fabric, to assist the intertwining yarn. However, a planetary device is not used for the additional yarn. The additional yarn is preferably used in a plain weave that is excellent in selvedge tightening property. When the additional yarn is used, the number of additional yarns is preferably 2 to 12 at each end of the woven fabric.

A total fineness of the additional yarns used in the woven fabric is preferably 230 dtex or less. When the total fineness is 230 dtex or less, the binding force of the weft yarn per fineness increases, and a selvedge of the woven fabric can be constructed without being loosened.

As for a boiling water shrinkage value of the additional yarn used in the woven fabric, a difference obtained by subtracting a boiling water shrinkage value (%) of the ground yarn from a boiling water shrinkage value of the additional yarn is preferably 5.0% or less. More preferably, the difference obtained by subtracting the boiling shrinkage value (%) of the ground yarn from the boiling shrinkage value of the additional yarn is 1.5% or more and 5.0% or less. When the boiling shrinkage of the additional yarn is higher than the boiling shrinkage of the ground yarn, the intertwining yarn shrinks more than the ground yarn, tightening the selvedge, so that selvedge slacking is suppressed. However, when the difference obtained by subtracting the boiling shrinkage value (%) of the ground yarn from the boiling shrinkage value of the additional yarn is more than 5.0%, the selvedge is excessively tightened due to the difference in shrinkage to become in a suspended state, which may induce selvedge flare.

Materials and types of the intertwining yarn and the additional yarn are suitably selected according to a type of a ground yarn and a weave density. In the present embodiment, the materials and types of the intertwining yarn and the additional yarn are not particularly limited. By way of an example, as the materials for the intertwining yarn and the additional yarn, a polyamide-based fiber and a polyester-based fiber are preferable from the viewpoints of excellent mass productivity and economic efficiency. Moreover, the types of the intertwining yarn and the additional yarn include, but not particularly limited to, a monofilament, a multifilament, a spun yarn, and the like. As the types of the intertwining yarn and the additional yarn, a multifilament and a monofilament are preferable from the viewpoint that a single yarn is prevented from becoming fuzzy, making it less likely to cause troubles in a guide and a heald.

Upon completion of weaving, the obtained fabric is dried if necessary. The drying temperature is usually 80°C or higher. When the drying temperature is 80°C or higher, the woven fabric has a small dry heat shrinkage to improve in dimensional stability. As a result, the woven fabric may be appropriately used as an airbag.

Next, the woven fabric is suitably subjected to processing such as refining and heat setting. The refining temperature in the refining process is preferably 30°C or higher, and more preferably 45°C or higher. When the intertwining yarn and the additional yarn are heated, they shrink from the ground yarn. As a result, selvedge slacking of the woven fabric becomes easily suppressed. Moreover, the refining temperature is preferably 90°C or lower, and more preferably 70°C or lower. When the refining temperature is 30°C or higher, the woven fabric may be removed of residual strain to improve in dimensional stability. Moreover, when the refining temperature is 90°C or lower, the woven fabric may be prevented from significantly shrinking. As a result, the woven fabric may improve in dimensional stability.

Similarly to the refining, the heat setting temperature in the heat setting is preferably a temperature capable of removing strain remaining in the woven fabric after weaving, which may suppress a large shrinkage of the woven fabric. Specifically, the heat setting temperature is preferably 110°C or higher, and more preferably 120°C or higher. Moreover, the heat setting temperature is preferably 190°C or lower. When the heat setting temperature is within the above-described ranges, the obtained woven fabric may improve in dimensional stability, the intertwining yarn and the additional yarn easily shrink than the ground yarn, and selvedge slacking is easily suppressed.

The woven fabric that has undergone the above-described steps may be a coated woven fabric that has been suitably coated with resin or elastomer. The woven fabric of the present embodiment may be imparted with impermeability by being coated. When coating is applied, an amount of coating is preferably about 5 to 35 g/m$^2$. The resin or elastomer is not particularly limited. By way of an example, the resin or elastomer is preferably one having heat resistance, cold resistance, and flame retardancy, and more preferably a silicone resin, a polyamide-based resin, a polyurethane resin, a fluororesin, or the like. Moreover, the woven fabric may also be used as an uncoated woven fabric without being coated. In addition, the obtained woven fabric may be cut at the vicinity of the selvedge fringe after heat setting or coating.

As described above, according to the manufacturing method of the woven fabric of the present embodiment, selvedge flare at the selvedge end during weaving of the woven fabric for airbag can be reduced. In particular, as an application, when the woven fabric is used as a woven fabric for airbag, according to the manufacturing method of the woven fabric of the present embodiment, a woven fabric for airbag can be provided which is excellent in processing passability and uniform application property in refining, setting and coating steps to be performed after weaving, and further, which is excellent in cuttability and sewability.

One embodiment of the present invention has been described above. The present invention is not particularly limited to the above-described embodiments. Besides, the above-described embodiments mainly describe an invention having the following configurations.

(1) A woven fabric for airbag consisting of synthetic fibers, wherein a ratio of a selvedge flare amount R represented by the following equation is 5.0% or less.

$$S = \sum_{k=1}^{n} (W_k \times H_k)/2$$

$$R = S/(200 \times F) \times 100$$

{wherein, S = selvedge flare amount, in cm$^2$, $W_k$ = selvedge flare width, in cm, $H_k$ = selvedge flare depth, in cm, n is the number of selvedge flares, R is a ratio of a selvedge flare amount, in %, and F is a base fabric width, in cm.}

(2) A woven fabric for airbag, wherein a difference obtained by subtracting a boiling water shrinkage of a ground yarn from a boiling water shrinkage of an intertwining yarn is 5.0% or less, and a difference obtained by subtracting the boiling water shrinkage of the ground yarn from a boiling water shrinkage of an additional yarn is 5.0% or less.

(3) The woven fabric for airbag of (2), a difference between a crimp ratio of a warp yarn of a ground yarn in the central part and a crimp ratio of a warp yarn of a ground yarn in the vicinity of the selvedge is preferably 4.0% or less.
(4) The woven fabric for airbag of any one of (1) to (3), wherein the selvedge at the end of the woven fabric has an intertwining yarn composed of fibers with a fineness of 150 dtex or less and an additional yarn composed of fibers with a fineness of 230 dtex or less.

(5) A coated woven fabric obtained by applying resin or elastomer to the surface of the woven fabric for airbag of any one of (1) to (4).

EXAMPLE

Hereinafter, the present invention will be described in detail with reference to Examples. The present invention is not limited to these Examples. Besides, in the following Examples, each characteristic value was calculated by the following methods.

<Method of calculating characteristic value>

(Total fineness)

A total fineness was calculated by measuring a fineness based on corrected weight with a predetermined load of 0.045 cN/dtex according to JIS L1013:2010 8.3.1 A method.

(Number of filaments)

The number of filaments was calculated based on the method of JIS L1013:2010 8.4.

(Weave density)

A weave density of each of a warp yarn and a weft yarn was calculated based on JIS L 1096:2010 8.6.1. Specifically, a sample was placed on a flat table, removed of unnatural creases and tension, and the number of each of warp yarn and weft yarn in a 2.54 cm section was counted at five different locations to calculate an average value of respective weave densities.

(Yarn strength/elongation)

According to JIS L1017:1995, Section 7.5 Tensile strength and elongation rate, (1) Measurement method by the standard time test, an S-S curve of a sample (a filament or a decomposed yarn) was measured using TENSILON UCT-100 manufactured by ORIENTEC CO., LTD. Prior to the measurement, a sample was left to stand for 48 hours under an environment of a room temperature at 25°C and a relative humidity of 55% with no load, to control the humidity. Then, an S-S curve of the sample was measured under the same environment with an initial load of 0.08 cN/dtex, a sample length of 250 mm, and a tensile speed of 300 m/min. A strength was calculated by dividing a strength at a point showing the maximum strength on the S-S curve by a total fineness. An elongation was calculated by dividing an elongation at a point showing the maximum strength on the S-S curve by a sample length and multiplying by 100.

(Boiling water shrinkage value)

A boiling water shrinkage value was calculated based on the method of JIS L1013:2010 8.16. A method.

(Ratio of flare amount)

A ratio of a flare amount was measured by the following procedure. A sample was pulled out from a roll sample (original woven fabric) on a flat table in a longitudinal direction, and cut into 2 m pieces each, which were stacked into a total of 20 sheets of laminated layers, on which a 3 kg of paper tube that filled the width was placed and rolled in the longitudinal direction without applying any force from the end. A light with an illuminance of 1000 Lx at a distance of 50 cm was used to illuminate in order from a selvedge end upward from a height of 10 cm to find a triangular shadow due to selvedge flare, and in the selvedge flare that appeared when irradiated with the light from a position 20 cm away in a longitudinal direction from the center of the selvedge flare appeared, when an arc length of a portion that swelled in a longitudinal direction of a base fabric was defined as a selvedge flare width ($W_k$: cm), and a swelling in a width direction of the base fabric was defined as a selvedge flare depth ($H_k$: cm), a triangular area Sk, in $cm^2$, with the selvedge flare width being as the base and the selvedge flare depth being as the apex was measured. Sk was calculated for all selvedge flares on both selvedges of the base fabric, summing them up as a selvedge flare amount S ($cm^2$), which was divided by a sample area (base fabric (sample) width F, in cm, $\times$ 200 cm) to calculate a ratio of a selvedge flare amount R (%).

(Difference in crimp ratio of warp yarn)

A crimp ratio was measured based on JIS L 1096:2010 8.7 (B method). A load of 1/10 g was used for 1 dtex. A crimp ratio of a warp yarn in the central part indicates an average value (C1) of three measurements of the crimp ratio of the warp yarn in the central part in the width direction of the woven fabric, a crimp ratio of a warp yarn of a ground yarn in the vicinity of the selvedge indicates an average value (C2) of three measurements of the crimp ratio of the warp yarn at 4 sites on a center of 3 mm and a center of 5 mm, starting from the additional yarns on both ends of the woven fabric, and an absolute value of a value obtained by subtracting C2 from C1 is defined as a difference in crimp ratio of a warp yarn of a ground yarn in the central part of the woven fabric and in the vicinity of the selvedge. Besides, when a selvedge cut is performed, the cut point is defined as a starting point.

<Example 1>

(Warp yarn, weft yarn)

As each of a warp yarn and a weft yarn, an untwisted synthetic fiber filament was prepared which consists of nylon 66, has a circular cross section, is composed of fiber 72 filaments with a single fiber fineness of 6.5 dtex, has a total fineness of 470 dtex, has a tensile strength of 8.47 cN/dtex, has an elongation of 23.5%, and has a boiling water shrinkage of 6.2%.

(Weaving)

Using the above-described yarn as a ground yarn for the warp yarn and weft yarn, a plain weave fabric with a weave density of 46 yarns/2.54 cm of the warp yarn and a weave density of 46 yarns/2.54 cm of the weft yarn was woven with a water jet loom equipped with a full-width temple. At that time, the tension of the warp yarn was adjusted to 0.21 cN/dtex.

At that time, an intertwining yarn and an additional yarn were used for both selvedges of the woven fabric. As the intertwining yarn, a nylon 66 monofilament having a circular cross-sectional shape, 22 dtex, a tensile strength of 4.8 cN/dtex, an elongation of 47.5%, and a boiling water shrinkage of 10.5% was used to be supplied in two yarns each at both selvedges from a planetary system. As the additional yarn, similarly for the intertwining yarn, a nylon 66 monofilament having 22 dtex was used to be supplied in four yarns each at both selvedges from a bobbin.

(Refining and heat setting)

Next, the obtained woven fabric was refined at 65°C with an open soaper type refining machine, washed with hot water at 40°C, and dried at 120°C. Furthermore, using a pin tenter dryer, a tentering ratio was set to achieve the same width as the width of the woven fabric after drying, and the woven fabric was heat-set at 180°C for 60 seconds under a dimensional regulation with an overfeed rate of 1%. Table 1 shows properties of the obtained woven fabric.

(Coating)

Next, this woven fabric was coated with a solvent-free silicone resin having a viscosity of 50 Pa·s so as to have a coating amount shown in the Table using a floating knife coater, and then vulcanized at 190°C for 1 minute to obtain a woven fabric for airbag. The obtained woven fabric had a small selvedge flare and a uniform and good selvedge tightening state.

<Example 2>

As an intertwining yarn, a nylon 66 multifilament that has a circular cross-sectional shape, is composed of 34 filaments with a single fiber fineness of 2.3 dtex, has a total fineness of 78 dtex, has a tensile strength of 5.2 cN/dtex, has an elongation of 45%, and has a boiling water shrinkage of 7.9% was supplied in two yarns each at both selvedges from a bobbin, and as an additional yarn, a filament similarly prepared as in Example 1, except that it has a total fineness of 156 dtex and is composed of 68 filaments, in which two intertwining yarns were doubled, was prepared to produce an woven fabric for airbag.

The obtained woven fabric had a small selvedge flare and a uniform and good selvedge tightening state. Table 1 shows properties of the obtained woven fabric.

<Example 3>

As an intertwining yarn, a nylon 66 multifilament that has a circular cross-sectional shape, is composed of 34 filaments with a single fiber fineness of 2.3 dtex, has a total fineness of 78 dtex, has a tensile strength of 5.8 cN/dtex, has an elongation of 30%, and has a boiling water shrinkage of 9.7% was supplied in two yarns each at both selvedges from a bobbin, and as an additional yarn, a filament similarly prepared as in Example 1, except that it has a total fineness of 156 dtex and is composed of 68 filaments, in which two intertwining yarns were doubled, was prepared to produce an woven fabric for airbag.
The obtained woven fabric had a small selvedge flare and a uniform and good selvedge tightening state. Table 1 shows properties of the obtained woven fabric.

<Comparative example 1>

As an intertwining yarn, a nylon 66 multifilament that has a circular cross-sectional shape, is composed of 24 filaments with a single fiber fineness of 3.3 dtex, has a total fineness of 78 dtex, has a tensile strength of 4.9 cN/dtex, has an elongation of 41%, and has a boiling water shrinkage of 11.3% was supplied in two yarns each at both selvedges from a bobbin, and as an additional yarn, a filament similarly prepared as in Example 1, except that it has a total fineness of 156 dtex and is composed of 48 filaments, in which two intertwining yarns were doubled, was prepared to produce a woven fabric for airbag.
The obtained woven fabric had a large selvedge flare and had no uniform selvedge tightening state. Moreover, as the selvedge tightening state was not uniform, a difference in crimp ratio of the warp yarn of the ground yarn in the central part of the woven fabric and in the vicinity of the selvedge was 4.1%. Table 1 shows properties of the obtained woven fabric.

Table 1

| | | Unit | Example 1 | Example 2 | Example 3 | Comparative example 1 |
|---|---|---|---|---|---|---|
| Width of woven fabric | | cm | 198.1 | 197.7 | 198.6 | 198.7 |
| Density of woven fabric | Warp yarn | Yarn/ 2.54 cm | 47.6 | 47.5 | 47.6 | 47.6 |
| | Weft yarn | Yarn/ 2.54 cm | 46.3 | 46.0 | 46.3 | 46.3 |
| Boiling water shrinkage value of ground yarn | | % | 6.2 | 6.2 | 6.2 | 6.2 |
| Coating amount | | g/m$^2$ | 13 | 18 | 16 | 13 |
| Intertwining yarn | Total fineness | dtex | 22 | 78 | 78 | 78 |
| | Number of filaments | Yarn | 1 | 34 | 34 | 24 |
| | Strength | cN/ dtex | 4.8 | 5.2 | 5.8 | 4.9 |
| | Elongation | % | 47.5 | 45.0 | 30.0 | 41.0 |
| | Boiling water shrinkage value | % | 10.5 | 7.9 | 9.7 | 11.3 |

(continued)

| | | Unit | Example 1 | Example 2 | Example 3 | Comparative example 1 |
|---|---|---|---|---|---|---|
| Additional yarn | Total fineness | dtex | 22 | 156 | 156 | 156 |
| | Number of filaments | Yarn | 1 | 68 | 68 | 48 |
| | Strength | cN/ dtex | 4.8 | 5.2 | 5.8 | 4.9 |
| | Elongation | % | 47.5 | 45.0 | 30.0 | 41.0 |
| | Boiling water shrinkage value | % | 10.5 | 7.9 | 9.7 | 11.3 |
| | Number of yarns | Yarn | 4 | 2 | 2 | 2 |
| Crimp ratio of ground yarn and warp yarn | Center(C1) | % | 7.2 | 7.4 | 7.3 | 7.3 |
| | Vicinity of selvedge(C2) | % | 4.8 | 4.4 | 3.8 | 3.2 |
| | Difference | % | 2.4 | 3.0 | 3.5 | 4.1 |
| | | Unit | Example 1 | Example 2 | Example 3 | Comparative example 1 |
| Flare amount | | cm$^2$ | 1724 | 1584 | 1752 | 2327 |
| Ratio of flare amount | | % | 4.4 | 4.0 | 4.4 | 5.9 |

REFERENCE SIGNS LIST

$W_k$: Selvedge flare width
$H_k$: Selvedge flare depth
S1 to Sk: Flare area
F: Base fabric (sample) width

**Claims**

1. A woven fabric for airbag consisting of synthetic fibers, wherein a ratio of a selvedge flare amount R represented by the following equation is 5.0% or less.

$$S = \sum_{k=1}^{n} (W_k \times H_k) / 2$$

$$R = S / (200 \times F) \times 100$$

{wherein, S = selvedge flare amount, in cm$^2$, $W_k$ = selvedge flare width, in cm, $H_k$ = selvedge flare depth, in cm, n is the number of selvedge flares, R is a ratio of a selvedge flare amount, in %, and F is a base fabric width, in cm.}

2. A woven fabric for airbag, wherein a difference obtained by subtracting a boiling water shrinkage of a ground yarn from a boiling water shrinkage of an intertwining yarn is 5.0% or less, and
wherein a difference obtained by subtracting the boiling water shrinkage of the ground yarn from a boiling water shrinkage of an additional yarn is 5.0% or less.

3. The woven fabric for airbag of claim 2, wherein a difference between a crimp ratio of a warp yarn of a ground yarn in the central part and a crimp ratio of a warp yarn of a ground yarn in the vicinity of the selvedge is 4.0% or less.

4. The woven fabric for airbag of any one of claims 1 to 3, wherein the selvedge at the end of the woven fabric has an intertwining yarn composed of fibers with a fineness of 150 dtex or less and an additional yarn composed of fibers with a fineness of 230 dtex or less.

5. A coated woven fabric obtained by applying resin or elastomer to the surface of the woven fabric for airbag of any one of claims 1 to 4.

# FIG.1

## FIG. 2

H k

W k

## FIG. 3

Light

$S_k$

20cm

## INTERNATIONAL SEARCH REPORT

| International application No. |
| --- |
| **PCT/JP2022/006773** |

**A. CLASSIFICATION OF SUBJECT MATTER**

*D03D 1/02*(2006.01)i; *B60R 21/235*(2006.01)i
FI: D03D1/02; B60R21/235

According to International Patent Classification (IPC) or to both national classification and IPC

**B. FIELDS SEARCHED**

Minimum documentation searched (classification system followed by classification symbols)

D03D1/02; B60R21/235

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2002-69790 A (ASAHI KASEI CORP.) 08 March 2002 (2002-03-08)<br>entire text | 1-5 |
| A | JP 9-302550 A (TORAY IND., INC.) 25 November 1997 (1997-11-25)<br>entire text | 1-5 |
| A | WO 2020/174889 A1 (TORAY IND., INC.) 03 September 2020 (2020-09-03)<br>entire text, all drawings | 1-5 |
| A | JP 2002-225669 A (TOYOBO CO., LTD.) 14 August 2002 (2002-08-14)<br>entire text | 3-5 |
| P, A | WO 2022/030505 A1 (TOYOBO CO., LTD.) 10 February 2022 (2022-02-10)<br>entire text, all drawings | 1-5 |

☐ Further documents are listed in the continuation of Box C.    ☑ See patent family annex.

| | |
| --- | --- |
| *   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **28 March 2022** | **12 April 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

International application No.

**PCT/JP2022/006773**

| Patent document cited in search report | | | Publication date (day/month/year) | Patent family member(s) | | | Publication date (day/month/year) |
|---|---|---|---|---|---|---|---|
| JP | 2002-69790 | A | 08 March 2002 | (Family: none) | | | |
| JP | 9-302550 | A | 25 November 1997 | (Family: none) | | | |
| WO | 2020/174889 | A1 | 03 September 2020 | (Family: none) | | | |
| JP | 2002-225669 | A | 14 August 2002 | US<br>entire text<br>CN | 2002/0130503<br><br>1360102 | A1<br><br>A | |
| WO | 2022/030505 | A1 | 10 February 2022 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H06322637 A
- JP 2002212856 A
- JP 2009035834 A
- JP 2014181430 A
- WO 2020174889 A
- JP H11048893 A